# EUROPEAN PATENT SPECIFICATION

(11) **EP 3 090 194 B1**
(45) Date of publication and mention of the grant of the patent: **04.10.2017**
(21) Application number: 14828362.5
(22) Date of filing: 30.12.2014
(51) Int. Cl.: F16H 35/02

(54) **VARIABLE STIFFNESS ACTUATOR**
AKTUATOR MIT VARIABLER STEIFIGKEIT
ACTIONNEUR À RIGIDITÉ VARIABLE

(30) Priority: 30.12.2013 US 201361921654 P; 18.04.2014 EP 14165311
(43) Date of publication of application: 09.11.2016
(73) Proprietor: Technische Universiteit Twente, 7522 NB Enschede (NL)
(72) Inventor: STRAMIGIOLI, Stefano, 7522 NB Enschede (NL); GROOTHUIS, Stefan Sebastiaan, 7500 AE Enschede (NL)
(74) Representative: Nederlandsch Octrooibureau
(86) International application number: PCT/NL2014/050919
(87) International publication number: WO 2015/102490

(56) References cited:
- WO-A1-2005/116483
- GB-A- 1 516 959
- US-A1- 2013 074 635

## Description

### Background

The present invention relates to a coupling system for transmitting torque around a central axis of the coupling system, wherein the coupling system has an adjustable stiffness.

Such a coupling system is known from US 2013178297 which relates to a stiffness adjustable rotary joint. See also document US2013/074635.

### Summary of the invention

The invention aims to provide a coupling system having an improved adjustment range.
Another object of the invention is to improve a coupling in that a problem associated therewith is at least partly solved.
Yet another object of the invention is to provide an alternative coupling system.

According to a first aspect of the invention this is realized with a coupling system for transmitting torque around a central axis of the coupling system, wherein the coupling system comprises;
- a stator,
- a hypocycloid transmission system rotatably supported by the stator,
- an output member for transmitting torque, which output member is rotatably coupled with the stator through the hypocycloid transmission system,
wherein, the hypocycloid transmission system comprises a planetary wheel member provided with a drive cam, the output member comprises a bending member at one end thereof coupled with the output member at an outer circumference thereof which bending member extends from the outer circumference of the output member towards the central axis, the drive cam contacts the bending member for driving the output member, and the radial position of the drive cam with respect to the bending member is adjustable through the hypocycloid transmission system, between an outer position proximate the circumference of the output member and an inner position proximate the central axis, for adjusting a desired stiffness of the coupling system.

The planetary wheel member provided with the drive cam, and the bending member extending from the outer circumference of the output member towards the central axis enables to adjust the stiffness between a maximum stiffness to zero. In case of zero stiffness, the output member is uncoupled with respect to the hypocycloid transmission system. This hypocycloid transmission system may also be referred to as a rotor.

The claimed system is named a coupling system since it intends to couple adjacent bodies like two links of a robot arm to form a joint between these links.

In an embodiment of the coupling system, the hypocycloid transmission system comprise a carrier supporting the planetary wheel member, and an annular member which engages the planetary wheel member at an outer circumference thereof in a driving manner, and wherein the radial position of the drive cam with respect to the bending member is adjustable through rotating the carrier with respect to the annular member.

In an embodiment of the coupling system, the inner position of the drive cam coincides with the central axis such that the output member may rotate freely around the drive cam. This uncouples the output member from the rotor which may be desired or beneficial in view of safety and/or efficiency in terms of use of energy.

In an embodiment of the coupling system, the hypocycloid transmission system comprises two planetary wheel members which mutually engage at the central axis in a driving manner. This is beneficial since in this way the coupling system is more balanced and symmetrical.

The hypocycloid transmission system may be a planetary gear system. It is however conceivable that the hypocycloid system comprises a rolling link mechanism between planetary wheel members or between the annular member and a planetary wheel member. Such a rolling link mechanism is known per se and stabilizes a rolling contact joint through one or more stabilization members like a band or flexure.

It is noted that when the hypocycloid transmission system is a planetary gear system, a sun gear is not really required for the functioning of the coupling system.

In an embodiment of the coupling system the drive cam is integrally formed with the planetary wheel member. This simplifies the design of the coupling system and reduces the number of parts.

In an embodiment of the coupling system the drive cam is pivotable with respect to the planetary wheel member. This enables to provide the cam with opposite contact areas for driving the output member both clockwise and counter clockwise.

In an embodiment of the coupling system, the bending element extends diametrical with respect to the central axis and the hypocycloid transmission system. This enables to mount the bending element at both its opposite end on the annular member which limits deformation of the bending element and is beneficial in view of control of the coupling system and its stiffness. The bending element may be mounted with the annular member in a sliding manner for accommodating deformation of the bending element.

In an embodiment, the coupling system comprises two bending elements.

In an embodiment of the coupling system, the two bending elements constitute a slit between them for receiving the cam or cams.

In an embodiment of the coupling system, the slit extends diametrical with respect to the central axis and the hypocycloid transmission system.

In an embodiment of the coupling system two bending elements are integrally formed.

In an embodiment of the coupling system, the two planetary wheel members are each provided with a drive cam. This enables to drive the output member in a symmetrical way.

In an embodiment of the coupling system, the drive cams are configured to mate in their inner position at the central axis such that the output member may rotate freely with respect to the hypocycloid transmission.

In an embodiment of the coupling system, the drive cams are configured to form a cylinder when they mate in their inner position at the central axis.

The invention further relates to a robotic system comprising a coupling system according to the invention. Such a robotic system may find use in care taking which involves interaction with humans. In this connection "robotic system" may also refer to prostheses and so-called exoskeletons.

The invention further relates to a use of a coupling system according to the invention in a robotic system.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantages.

### Description of the drawings

The invention will be further elucidated referring to a preferred embodiment shown in the schematic drawings wherein shown in:
Fig. 1 in perspective view an embodiment of the coupling system according to the invention;
fig. 2 a top view of the coupling system according to fig. 1;
fig 3 a schematic top view of the hypocycloid transmission system;
fig 4a-e a number of embodiments of the output member;
fig 5a an embodiment of the coupling system having one planetary member;
fig 5b an embodiment of the coupling system having two planetary members;
fig 5c the embodiment of 5b at maximum stiffness, and
fig 5d an embodiment of 5b adjusted at a stiffness between maximum stiffness and zero stiffness.

### Detailed description of embodiments

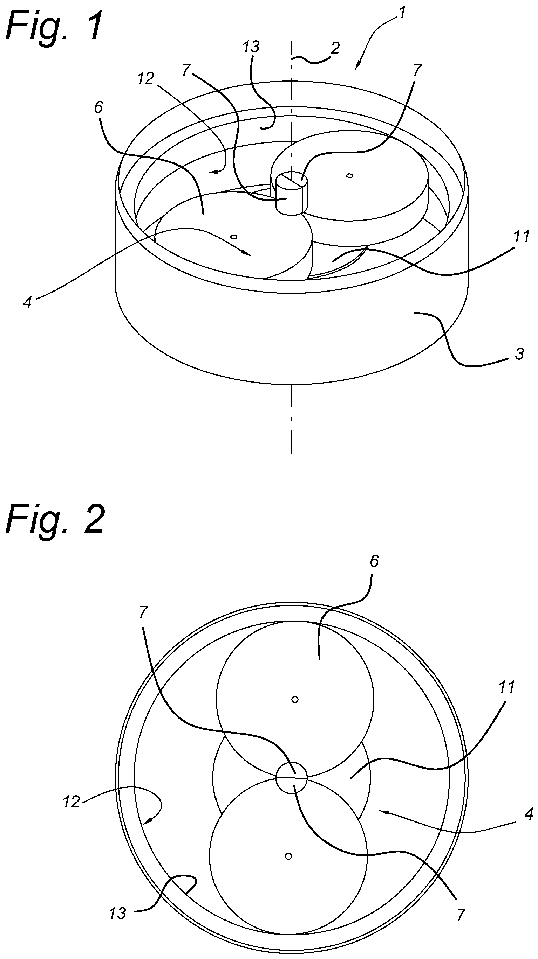

In the figures 1 and 2 there is shown a coupling system 1 for transmitting torque around a central axis 2 of the coupling system. The coupling system 1 is suitable for coupling links of a robotic system (not shown).

The coupling system 1 comprises a stator 3. It will be clear that in use of the coupling system 1, the stator will not necessarily be stationary but however dynamics of the coupling system 1 will be described with respect to said stator 3.

The coupling system 1 comprises a hypocycloid transmission system 4. The hypocycloid transmission system 4 is rotatably supported by the stator 3. The entire hypocycloid transmission system 4, also referred to with rotor, may rotate around the central axis 2.

The coupling system 1 comprises an output member 5 for transmitting torque to a robotic system part (not shown). The output member 5 is rotatably coupled with the stator 3 through the hypocycloid transmission system 4.

The hypocycloid transmission system 4 comprises two planetary wheel members 6. The two planetary wheel members 6 mutually engage at the central axis in a driving manner. The engagement of the two wheel members 6 is shown schematically, however any engagement suitable for driving is conceivable like tooth engagement, effect of friction, rolling link mechanism, etc.

The hypocycloid transmission system 4 comprise a carrier 11. The carrier 11 supports the two planetary wheel member 6. The hypocycloid transmission system 4 comprises an annular member 12. The annular member 12 engages the two planetary wheel member in a driving manner. Again, the engagement of the annular member 12 and the two wheel members 6 is shown schematically, however any engagement suitable for driving is conceivable. The wheel members 6 engage the annular member 12 at an inner circumference 13 of the annular member 12. The two wheel members 6 have a diameter 1/2D which is half the diameter D of the inner circumference 13 of the annular member 12.

The wheel member 6, here each of the two wheel members 6, are provided with a drive cam 7. The drive cam 7 is integrally formed with the planetary wheel member 6. The drive cam 7 is provided at the outer circumference of the wheel member 6. The drive cam 7 extends axially from the wheel member 6 and parallel with respect to the central axis 2. The radial position of the drive cam 7 with respect to the central axis 2 is adjustable through the hypocycloid transmission system 4.

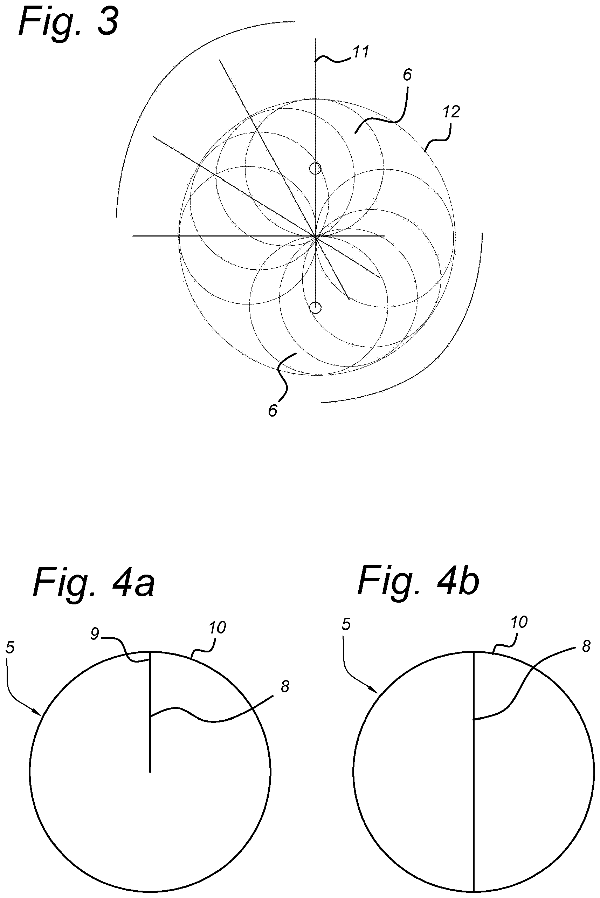

As schematically shown in fig. 3, the radial position of the drive cam 7 with respect to the bending member 8 is adjustable through rotating the carrier 11 with respect to the annular member 12.

When the inner position of the drive cam 7 or cams 7 coincides with the central axis 2, the output member 5 may rotate freely around the drive cam 7. Effectively, the output member is uncoupled from the rotor. In case of two drive cams 7 the drive cams 7 are configured to mate, as shown in fig. 1, in their inner position at the central axis such that the output member may rotate freely with respect to the hypocycloid transmission. Here, the drive cams 7 are configured to form a cylinder when they mate in their inner position at the central axis 2.

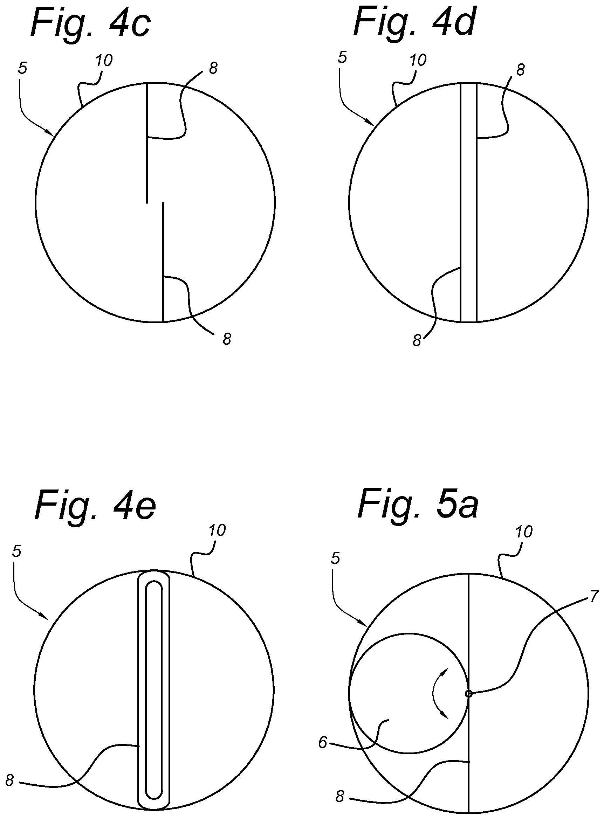

In fig. 5a, the drive cam 7 is pivotable with respect to the planetary wheel member 6. The cam 7 is provided with opposite contact areas (not shown in detail) for driving the output member 8 both clockwise and counter clockwise.

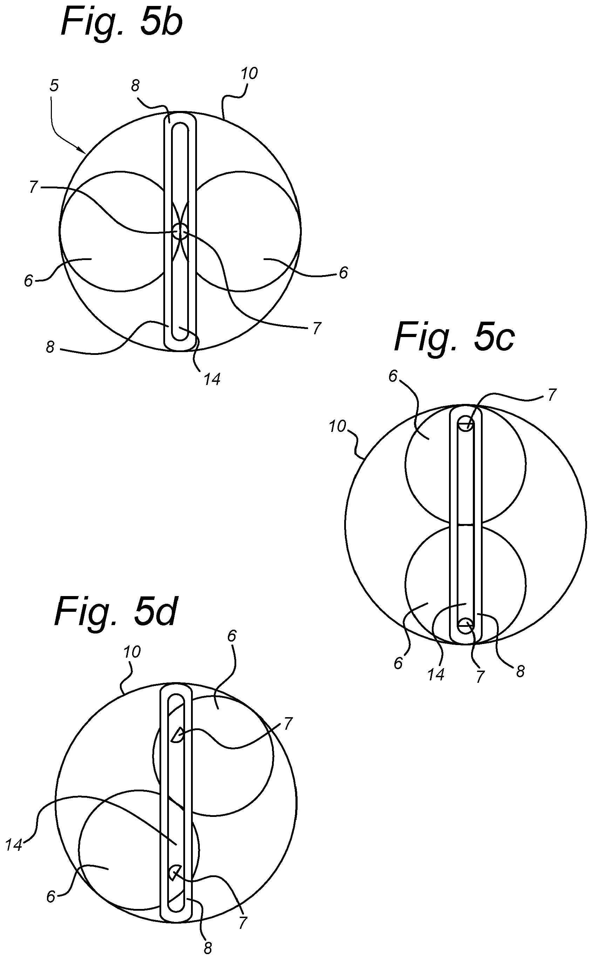

As shown in fig. 4 and 5, the output member 5 comprises a bending member 8. In use, the drive cams 7 contact the bending member 8 in a driving manner. The drive cam 7 and the bending member 8 contact in a bearing manner. The bending member 8 is at one 9 end thereof coupled with the output member 5 at an outer circumference 10 of the output member 5. The bending member 8 extends from the outer circumference 10 of the output member 5 towards the central axis 2. As mentioned, the drive cam 7 contacts the bending member 8 for driving the output member 5. The radial position of the drive cam 7 with respect to the bending member 8 is adjustable through the hypocycloid transmission system 4. The radial position of the drive cam 7 is adjustable between an outer position, shown in fig. 5c, proximate the circumference of the output 5 member and an inner position, shown in e.g. fig 1, proximate the central axis 2. The stiffness of the coupling system 1 around its central axis 2, depends on the radial position of the drive cams 7. In fig 5c the coupling system is adjusted at maximum stiffness, and in fig 5d the coupling system is adjusted at a stiffness between maximum stiffness and zero stiffness.

As shown in fig. 4b, 5a the bending element 8 extends diametrical with respect to the central axis 2 and the hypocycloid transmission system 4.

As shown in fig. 4c, 4d, the output member 5 comprises two bending elements 8. Here, these two bending member enclose the drive cam 7 or cams.

As shown in fig. 4e and 5b, the two bending elements 8 constitute a slit 14 between them for receiving the drive cam 7 or cams 7.Here, the slit 14 extends diametrical with respect to the central axis 2 and the hypocycloid transmission system 4. In this case, as shown in fig. 4e, the two bending elements 8 are integrally formed to constitute the slit 14 between them.

It will also be obvious after the above description and drawings are included to illustrate some embodiments of the invention, Starting from this disclosure, many more embodiments will be evident to a skilled person which are within the scope of protection of this invention.

## Claims

1. Coupling system (1) for transmitting torque around a central axis (2) of the coupling system, wherein the coupling system comprises;
- a stator (3),
- a hypocycloid transmission system (4) rotatably supported by the stator,
- an output member (5) for transmitting torque, which output member is rotatably coupled with the stator through the hypocycloid transmission system,
wherein, the hypocycloid transmission system comprises a planetary wheel member (6) provided with a drive cam (7), the output member comprises a bending member (8) at one (9) end thereof coupled with the output member at an outer circumference (10) thereof which bending member extends from the outer circumference of the output member towards the central axis, the drive cam contacts the bending member for driving the output member, and **characterised in that** the radial position of the drive cam with respect to the bending member is adjustable through the hypocycloid transmission system, between an outer position proximate the circumference of the output member and an inner position proximate the central axis, for adjusting a desired stiffness of the coupling system.

2. Coupling system (1) according to claim 1, wherein the hypocycloid transmission system comprise a carrier (11) supporting the planetary wheel member, and an annular member (12) which engages the planetary wheel member at an outer circumference thereof in a driving manner, and wherein the radial position of the drive cam with respect to the bending member is adjustable through rotating the carrier with respect to the annular member.

3. Coupling system (1) according to a preceding claim, wherein the inner position of the drive cam coincides with the central axis such that the output member may rotate freely around the drive cam.

4. Coupling system (1) according to a preceding claim, wherein the hypocycloid transmission system is a planetary gear system.

5. Coupling system (1) according to a preceding claim, wherein the hypocycloid transmission system comprises two planetary wheel members which mutually engage at the central axis in a driving manner.

6. Coupling system (1) according to a preceding claim, wherein the drive cam is integrally formed with the planetary wheel member.

7. Coupling system (1) according to a preceding claim 1-5, wherein the drive cam is pivotable with respect to the planetary wheel member.

8. Coupling system (1) according to a preceding claim, wherein the bending element extends diametrical with respect to the central axis and the hypocycloid transmission system.

9. Coupling system (1) according to a preceding claim, comprising two bending elements.

10. Coupling system (1) according to claim 9, wherein the two bending elements constitute a slit between them for receiving the cam or cams.

11. Coupling system (1) according to claim 10, wherein the slit extends diametrical with respect to the central axis and the hypocycloid transmission system.

12. Coupling system (1) according to a preceding claim 9-11, wherein two bending elements are integrally formed.

13. Coupling system (1) according to a preceding claim 5-12, wherein the two planetary wheel members are each provided with a drive cam.

14. Coupling system (1) according to claim 13, wherein the drive cams are configured to mate in their inner position at the central axis such that the output member may rotate freely with respect to the hypocycloid transmission.

15. Coupling system (1) according to claim 14, wherein the drive cams are configured to form a cylinder when they mate in their inner position at the central axis.

## Patentansprüche

1. Kupplungssystem (1) zum Übertragen von Drehmoment um eine mittige Achse (2) des Kupplungssystems, wobei das Kupplungssystem umfasst;
- einen Stator (3),
- ein hypozykloidisches Übertragungssystem (4), das vom Stator drehbar unterstützt ist,
- ein Abgabeelement (5) zum Übertragen von Drehmoment, welches Abgabeelement durch das hypozyloidische Übertragungssystem drehbar mit dem Stator gekuppelt ist,
wobei das hypozykloidische Übertragungssystem ein Planetenradelement (6) umfasst, das mit einem Antriebsnocken (7) versehen ist, wobei das Abgabeelement ein Biegeelement (8) an einem (9) Ende davon umfasst, das mit dem Abgabeelement an einem äußeren Umfang (10) davon gekoppelt ist, welches Biegeelement sich ab dem äußeren Umfang des Abgabeelements in Richtung der mittigen Achse erstreckt, wobei der Antriebsnocken das Biegeelement kontaktiert, um das Abgabeelement anzutreiben, und **dadurch gekennzeichnet, dass** die radiale Position des Antriebsnockens in Bezug auf das Biegeelement durch das hypozykloidische Übertragungssystem zwischen einer äußeren Position nahe dem Umfang des Abgabeelements und einer inneren Position nahe der mittigen Achse einstellbar ist, um die gewünschte Steifigkeit des Kupplungssystems einzustellen.

2. Kupplungssystem (1) nach Anspruch 1, wobei das hypozykloidische Übertragungssystem einen Träger (11), der das Planetenradelement stützt, und ein ringförmiges Element (12) umfasst, welches an einem äußeren Umfang davon auf eine antreibende Weise das Planetenradelement in Eingriff bringt, und wobei die radiale Position des Antriebsnockens in Bezug auf das Biegeelement durch Drehen des Trägers, in Bezug auf das ringförmige Element, einstellbar ist.

3. Kupplungssystem (1) nach einem vorhergehenden Anspruch, wobei die innere Position des Antriebsnockens mit der mittigen Achse derart übereinstimmt, dass sich das Abgabeelement frei um den Antriebsnocken herum drehen kann.

4. Kupplungssystem (1) nach einem vorhergehenden Anspruch, wobei das hypozykloidische Übertragungssystem ein Planetengetriebesystem ist.

5. Kupplungssystem (1) nach einem vorhergehenden Anspruch, wobei das hypozykloidische Übertragungssystem zwei Planetenradelemente umfasst, die an der mittigen Achse antreibend ineinandergreifen.

6. Kupplungssystem (1) nach einem vorhergehenden Anspruch, wobei der Antriebsnocken integral mit dem Planetenradelement gebildet ist.

7. Kupplungssystem (1) nach einem der vorhergehenden Ansprüche 1-5, wobei der Antriebsnocken in Bezug auf das Planetenradelement schwenkbar ist.

8. Kupplungssystem (1) nach einem vorhergehenden Anspruch, wobei sich das Biegeelement in Bezug auf die mittige Achse und das hypozykloidische Übertragungssystem diametral erstreckt.

9. Kupplungssystem (1) nach einem vorhergehenden Anspruch, das zwei Biegeelemente umfasst.

10. Kupplungssystem (1) nach Anspruch 9, wobei die zwei Biegeelemente einen Schlitz dazwischen zur Aufnahme des Nockens oder der Nocken konstituieren.

11. Kupplungssystem (1) nach Anspruch 10, wobei sich der Schlitz diametral in Bezug auf die mittige Achse und das hypozykloidische Übertragungssystem diametral erstreckt.

12. Kupplungssystem (1) nach einem vorhergehenden Anspruch 9 -11, wobei zwei Biegeelemente integral gebildet sind.

13. Kupplungssystem (1) nach einem vorhergehenden Anspruch 5-12, wobei die zwei Planetenradelemente jeweils mit einem Antriebsnocken versehen sind.

14. Kupplungssystem (1) nach Anspruch 13, wobei die Antriebsnocken konfiguriert sind, in ihrer inneren Position an der mittigen Achse derart zusammenzupassen, dass das Ausgabeelement in Bezug auf das hypozykloidische Übertragungssystem frei rotieren kann.

15. Kupplungssystem (1) nach Anspruch 14, wobei die Antriebsnocken konfiguriert sind, einen Zylinder zu bilden, wenn sie in ihrer inneren Position an der mittigen Achse zusammenpassen.

## Revendications

1. Système de couplage (1) pour transmettre un couple autour d'un axe central (2) du système de couplage, dans lequel le système de couplage comprend ;
- un stator (3),
- un système de transmission hypocycloïde (4) supporté en rotation par le stator,
- un élément de sortie (5) pour transmettre un couple, lequel élément de sortie est couplé de manière rotative avec le stator à travers le système de transmission hypocycloïde,
dans lequel, le système de transmission hypocycloïde comprend un élément de roue planétaire (6) muni d'une came d'entraînement (7), l'élément de sortie comprend un élément d'incurvation (8) à une extrémité (9) de celui-ci couplé à l'élément de sortie au niveau d'une circonférence extérieure (10) de celui-ci, lequel élément d'incurvation s'étend à partir de la circonférence extérieure de l'élément de sortie vers l'axe central, la came d'entraînement vient en contact avec l'élément d'incurvation pour entraîner l'élément de sortie, et **caractérisé en ce que** la position radiale de la came d'entraînement par rapport à l'élément d'incurvation est ajustable par l'intermédiaire du système de transmission hypocycloïde, entre une position extérieure à proximité de la circonférence de l'élément de sortie et une position intérieure à proximité de l'axe central, pour ajuster une rigidité souhaitée du système de couplage.

2. Système de couplage (1) selon la revendication 1, dans lequel le système de transmission hypocycloïde comprend un support (11) supportant l'élément de roue planétaire, et un élément annulaire (12) qui s'accouple avec l'élément de roue planétaire au niveau d'une circonférence extérieure de celui-ci d'une manière à entraînement, et dans lequel la position radiale de la came d'entraînement par rapport à l'élément d'incurvation est ajustable par rotation du support par rapport à l'élément annulaire.

3. Système de couplage (1) selon une revendication précédente, dans lequel la position intérieure de la came d'entraînement coïncide avec l'axe central de telle sorte que l'élément de sortie peut tourner librement autour de la came d'entraînement.

4. Système de couplage (1) selon une revendication précédente, dans lequel le système de transmission hypocycloïde est un système d'engrenage planétaire.

5. Système de couplage (1) selon une revendication précédente, dans lequel le système de transmission hypocycloïde comprend deux éléments de roue planétaire qui s'accouplent mutuellement sur l'axe central d'une manière à entraînement.

6. Système de couplage (1) selon une revendication précédente, dans lequel la came d'entraînement est formée d'un seul tenant avec l'élément de roue planétaire.

7. Système de couplage (1) selon une revendication précédente 1-5, dans lequel la came d'entraînement peut pivoter par rapport à l'élément de roue planétaire.

8. Système de couplage (1) selon une revendication précédente, dans lequel l'élément d'incurvation s'étend diamétralement par rapport à l'axe central et au système de transmission hypocycloïde.

9. Système de couplage (1) selon une revendication précédente, comprenant deux éléments d'incurvation.

10. Système de couplage (1) selon la revendication 9, dans lequel les deux éléments d'incurvation forment une fente entre eux pour recevoir la ou les cames.

11. Système de couplage (1) selon la revendication 10, dans lequel la fente s'étend diamétralement par rapport à l'axe central et au système de transmission hypocycloïde.

12. Système de couplage (1) selon une revendication précédente 9-11, dans lequel deux éléments d'incurvation sont formés d'un seul tenant.

13. Système de couplage (1) selon une revendication précédente 5-12, dans lequel les deux éléments de roue planétaire sont pourvus chacun d'une came d'entraînement.

14. Système de couplage (1) selon la revendication 13, dans lequel les cames d'entraînement sont configurées pour s'accoupler dans leur position intérieure au niveau de l'axe central de telle sorte que l'élément de sortie peut tourner librement par rapport à la transmission hypocycloïde.

15. Système de couplage (1) selon la revendication 14, dans lequel les cames d'entraînement sont configurées pour former un cylindre lorsqu'elles s'accouplent dans leur position intérieure au niveau de l'axe central.
